# EUROPÄISCHE PATENTANMELDUNG

(11) **EP 3 064 049 A1**
(43) Veröffentlichungstag der Anmeldung: **07.09.2016**
(21) Anmeldenummer: 15157735.0
(22) Anmeldetag: 05.03.2015
(51) Int. Cl.: A01B 59/04, A01B 59/041, A01B 59/06, A01D 67/00

(54) **ZENTRIERRAHMEN FÜR EIN LANDWIRTSCHAFTLICHES GERÄT**

(71) Anmelder: Forage Innovations B.V., 3147 PB Maassluis (NL)
(72) Erfinder: Hummel, Sepp, 5276 Wil - AG (CH)
(74) Vertreter: Octrooibureau Van der Lely N.V.

(57) **Zusammenfassung**

Ein Zentrierrahmen (16) für ein landwirtschaftliches Gerät (10) umfasst einen Heberahmen (18), der dazu ausgeführt ist, ein rotierbares Werkzeug (22) des landwirtschaftlichen Geräts (10) zu tragen, und mit dem der Zentrierrahmen (16) an einem Traktor (14) befestigbar und von dem Traktor (14) anhebbar ist, einen Schwenkrahmen (20), der mit dem Heberahmen (18) schwenkbar verbunden ist, eine Schwenkrahmen-Schwenkvorrichtung (35), die mit dem Schwenkrahmen (20) verbunden ist und die dazu ausgeführt ist, den Schwenkrahmen (20) von dem Heberahmen (18) wegzuschwenken, wenn der Heberahmen (18) von dem Traktor (14) angehoben wird; und zwei sich kreuzende Zugelemente (42, 44), die an dem Heberahmen (18) an lateral beabstandeten Befestigungspunkten (46) und an dem Schwenkrahmen (20) an lateral beabstandeten Befestigungspunkten (48) derart angebracht sind, dass die sich kreuzenden Zugelemente (42, 44) durch Wegschwenken des Schwenkrahmens (20) vom Heberahmen (18) expandiert werden und ab einer maximal expandierten Stellung laterale Kräfte auf den Heberahmen (18) ausüben, so dass das rotierbare Werkzeug (22) nach dem Anheben des Heberahmens (18) in einer zentrierten Stellung gehalten wird.

## Beschreibung

### GEBIET DER ERFINDUNG

Die Erfindung betrifft das Gebiet der Landmaschinentechnik. Insbesondere betrifft die Erfindung einen Zentrierrahmen für ein landwirtschaftliches Gerät, wie etwa einen Kreiselschwader.

### HINTERGRUND DER ERFINDUNG

Kreiselschwader sind ein Beispiel für landwirtschaftliche Geräte, die an einem Hubwerk vorne oder hinten an einem Traktor befestigt werden können und von dem Hubwerk zwischen einer Arbeitsstellung und einer Transport- bzw. Wendestellung (Vorgewendestellung) bewegt werden können.

In der Arbeitsstellung kann ein Rechen (im Allgemeinen ein rotierbares Werkzeug) über eine Kupplung am Traktor angetrieben werden. In dieser Position ist es wichtig, dass der Kreiselschwader dem Gelände folgt, so dass die Zinken des Rechens möglichst immer den gleichen Abstand zum Boden haben.

In der Transport- oder Wendestellung wiederum soll der Rechen möglichst wenig aus einer zentrierten Stellung ausgelenkt werden, um so eine unkontrollierte Seitwärtsbewegung zu verhindern, beispielsweise, wenn sich der Traktor und der Kreiselschwader in Hanglage befinden.

### ZUSAMMENFASSUNG DER ERFINDUNG

Aufgabe der Erfindung ist es, Seitwärtsbewegungen eines landwirtschaftlichen Geräts zu unterdrücken, wenn es in die Transport- oder Wendestellung gehoben ist.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft einen Zentrierrahmen für ein landwirtschaftliches Gerät. Der Zentrierrahmen bzw. Schwenkbock kann dabei dazu dienen, ein rotierbares Werkzeug des landwirtschaftliches Geräts an einem Traktor zu befestigen, wobei das rotierbare Werkzeug über den Zentrierrahmen derart mit dem Traktor verbunden werden kann, dass das rotierbare Werkzeug mit einer Hubvorrichtung des Traktors in einer Höhenrichtung schwenkbar ist und über eine Kupplung durch den Traktor in eine Drehbewegung versetzt werden kann.

Ein weiterer Aspekt der Erfindung betrifft einen Kreiselschwader mit einem derartigen Zentrierrahmen. Der Kreiselschwader kann beispielsweise einen einzigen Rechen aufweisen, der mittig an dem Zentrierrahmen aufgehängt ist.

Gemäß einer Ausführungsform der Erfindung umfasst der Zentrierrahmen einen Heberahmen, der dazu ausgeführt ist, ein rotierbares Werkzeug des landwirtschaftlichen Geräts zu tragen. Der Zentrierrahmen kann mit dem Heberahmen an einem Traktor befestigt werden und kann von dem Traktor angehoben bzw. abgesenkt werden. Der Zentrierrahmen ist somit von dem Traktor in einer Höhenrichtung schwenkbar. Beispielsweise kann der Heberahmen an einem Hubwerk eines Traktors befestigt werden.

Weiter umfasst der Zentrierrahmen einen Schwenkrahmen, der mit dem Heberahmen schwenkbar verbunden ist, und eine Schwenkrahmen-Schwenkvorrichtung, die mit dem Schwenkrahmen verbunden ist und die dazu ausgeführt ist, den Schwenkrahmen von dem Heberahmen wegzuschwenken, wenn der Heberahmen von dem Traktor angehoben wird. Der Schwenkrahmen kann beispielsweise an dem Ende des Heberahmens befestigt sein, das an dem Hubwerk befestigt werden kann. Der Schwenkrahmen kann um eine horizontale Achse schwenkbar sein, die im Wesentlichen orthogonal zu einer Längserstreckung des Zentrierrahmens verläuft.

Weiter umfasst der Zentrierrahmen zwei sich kreuzende Zugelemente, die an dem Heberahmen an (hinteren) lateral beabstandeten Befestigungspunkten und an dem Schwenkrahmen an (vorderen) lateral beabstandeten Befestigungspunkten derart angebracht sind, dass die sich kreuzenden Zugelemente durch Wegschwenken des Schwenkrahmens vom Heberahmen expandiert werden und ab einer maximal expandierten Stellung laterale Kräfte auf den Heberahmen ausüben, so dass das rotierbare Werkzeug nach dem Anheben des Heberahmens in einer zentrierten Stellung gehalten wird.

Mit dem Heberahmen kann das landwirtschaftliche Gerät bzw. der Zentrierrahmen von dem Traktor in eine Arbeitsstellung abgesenkt und in eine Transport- und/oder Wendestellung angehoben werden.

In der Arbeitsstellung ist der Schwenkrahmen gegen den Heberahmen geschwenkt und die beiden Befestigungspunkte des jeweiligen Zugelements sind so weit angenähert, dass sich das jeweilige Zugelement in einem gewissen Bereich expandieren und komprimieren kann, ohne dass es eine Kraft auf den Heberahmen wirkt. Auf diese Weise kann der Heberahmen bzw. das am Heberahmen befestigte rotierbare Werkzeug den Bewegungen des Traktors und/oder Bodenunebenheiten folgen.

Wird der Heberahmen von dem Traktor in die eine Transport- und/oder Wendestellung angehoben, wird der Schwenkrahmen von dem Heberahmen weggeschwenkt und die Zugelemente von dem Schwenkrahmen maximal expandiert, bis sie eine Kraft von dem Schwenkrahmen auf den Heberahmen übertragen können. Da die Zugelemente überkreuzt sind, wirken sie einem Dezentrieren des rotierbaren Werkzeugs entgegen. Wird das rotierbare Werkzeug, beispielsweise in Hanglage, aus einer zentralen Lage (bezüglich einer Mittelachse des landwirtschaftlichen Geräts) ausgelenkt, erzeugt das Zugelement, das bei der Auslenkung expandiert wird, eine laterale Gegenkraft, die der Auslenkung entgegenwirkt.

Ein Zugelement kann dabei jede Art von Vorrichtung sein, die ab einer gewissen Länge, in die sie expandiert werden kann, nicht mehr expandierbar ist, sondern eine Zugkraft übertragen kann. Beispielsweise kann ein Zugelement eine Teleskopstange, ein Seilzug oder eine Kette sein.

Gemäß einer Ausführungsform der Erfindung umfassen die sich kreuzenden Zugelemente jeweils eine Gleitstange und eine Aufnahme für die Gleitstange, wobei die Gleitstange in der Aufnahme verschiebbar ist und in der maximal expandierten Stellung an der Aufnahme anschlägt. Die Zugelemente können also Teleskopstangen sein.

Gemäß einer Ausführungsform der Erfindung ist die Aufnahme für die Gleitstange ein Rohr, in dem ein Ende der Gleitstange gleitend gelagert ist. Das Ende der Gleitstange in dem Rohr kann beispielsweise verdickt sein und an einem Ende des Rohrs, das mit einem Deckel verschlossen sein kann, in der maximal expandierten Stellung anschlagen.

Gemäß einer Ausführungsform der Erfindung sind die Gleitstange am Heberahmen und die Aufnahme am Schwenkrahmen befestigt. Auf diese Weise kann der Schwerpunkt des Zentrierrahmens in Richtung Aufhängung am Traktor verschoben werden.

Gemäß einer Ausführungsform der Erfindung sind die lateralen Befestigungspunkte am Heberahmen und/oder am Schwenkrahmen auf unterschiedlicher Höhe angebracht. Die Zugelemente können gegenüber einer Verformung aus einer axialen Richtung heraus starr sein. Beispielsweise kann eine Teleskopstange nur in die axiale Richtung expandiert und komprimiert werden, allerdings nicht in eine andere Richtung. Somit kann es notwendig sein, dass die beiden sich überkreuzenden Zugelemente auf unterschiedlicher Höhe angebracht werden, um sich im Kreuzungspunkt nicht gegenseitig zu behindern.

Gemäß einer Ausführungsform der Erfindung umfasst die Schwenkrahmen-Schwenkvorrichtung ein weiteres Zugelement, das derart mit dem Traktor koppelbar ist, dass der Schwenkrahmen, wenn der Heberahmen durch Anheben durch den Traktor nach unten fällt, durch das expandierte weitere Zugelement von dem Heberahmen weggeschwenkt wird. Das weitere Zugelement kann beispielsweise eine Kette und/oder einen Seilzug umfassen. Wenn der Traktor mit dem Hubwerk den Zentrierrahmen anhebt, fällt der Heberahmen durch sein Eigengewicht zunächst nach unten, wobei er den Schwenkrahmen mitnimmt. Der Schwenkrahmen ist mit einem weiteren Zugelement am Traktor befestigt, das in seiner maximal expandierten Stellung den Schwenkrahmen von dem Heberahmen wegzieht und dabei auch die beiden sich überkreuzenden Zugelement so lange expandiert, bis diese in der maximal expandierten Stellung angekommen sind. Am Ende zieht der Heberahmen mit seinem Gewicht an den beiden überkreuzten Zugelementen, die wiederum am Schwenkrahmen ziehen, der über das weitere Zugelement am Traktor zieht.

Gemäß einer Ausführungsform der Erfindung umfasst die Schwenkrahmen-Schwenkvorrichtung einen Hydraulikzylinder, der dazu ausgeführt ist, den Schwenkrahmen von dem Heberahmen wegzudrücken. Der Hydraulikzylinder kann dabei das weitere Zugelement, das am Traktor befestigt ist, unterstützen, den Schwenkrahmen vom Heberahmen wegzubewegen. Es ist aber auch möglich, dass auf das weitere Zugelement verzichtet wird und der Schwenkrahmen lediglich durch den Hydraulikzylinder bewegt wird.

Gemäß einer Ausführungsform der Erfindung verläuft der Hydraulikzylinder in einer Längsrichtung des Zentrierrahmens. Der Hydraulikzylinder kann an einem Ende mittig am Schwenkrahmen und am anderen Ende mittig am Heberahmen befestigt sein. Der Hydraulikzylinder kann auf dem Heberahmen angeordnet sein.

Gemäß einer Ausführungsform der Erfindung ist der Hydraulikzylinder derart mit der Hydraulik eines Hebezylinders des Traktors koppelbar, dass bei einem Anheben des Heberahmens durch den Hebezylinder der Schwenkrahmen durch den Hydraulikzylinder von dem Heberahmen weggedrückt wird. Beispielsweise kann der Hydraulikzylinder am Schwenkrahmen über ein T-Stück mit der Hydraulikleitung gekoppelt sein, die auch den Hebezylinder des Hubwerks mit Druck beaufschlagt.

Gemäß einer Ausführungsform der Erfindung ist ein Federelement, wie etwa eine Schraubenfeder, parallel zu dem Hydraulikzylinder zwischen dem Heberahmen und dem Schwenkrahmen angebracht, das dazu geeignet ist, den Heberahmen und den Schwenkrahmen aufeinander zu zu ziehen. Damit kann die Bewegung des Schwenkrahmens in Richtung des Heberahmens (die beim Absenken des Heberahmens erfolgen soll) unterstützt werden, wenn der Druck im Hydraulikzylinder wieder gesenkt wird.

Gemäß einer Ausführungsform der Erfindung weist der Heberahmen zwei lateral beabstandete Aufhängeelemente auf, die dazu ausgeführt sind, in ein Hubwerk des Traktors eingehängt zu werden, die über ein jochförmiges Rahmenelement verbunden sind, an dessen oberem Ende eine Aufhängung für das rotierbare Werkzeug angebracht ist. Mit anderen Worten kann der Heberahmen an der unteren Aufhängung (den beiden Unterlenkern) eines Dreipunkt-Hubwerks schwenkbar angebracht werden. Umgekehrt kann der Schwenkrahmen mit dem weiteren Zugelement (beispielsweise einer Kette) mit dem Oberlenker des Dreipunkt-Hubwerks verbunden werden.

Gemäß einer Ausführungsform der Erfindung ist der Schwenkrahmen (beispielsweise auf halber Höhe) mit einer sich lateral erstreckenden Welle an dem jochförmigen Rahmenelement angebracht. Auf diese Weise kann der Schwenkrahmen um eine sich lateral erstreckende Achse gegenüber dem Heberahmen geschwenkt werden.

Gemäß einer Ausführungsform der Erfindung weist der Heberahmen über einer Aufhängung für das rotierbare Werkzeug einen Querträger auf, an dessen Enden die lateral beabstandeten Befestigungspunkte für die sich kreuzenden Zugelemente vorgesehen sind. Die Aufhängung für das rotierbare Werkzeug kann ein Getriebe umfassen, über das das rotierbare Werkzeug über eine mit dem Traktor kuppelbare Welle in Drehung versetzt werden kann.

Gemäß einer Ausführungsform der Erfindung weist der Schwenkrahmen ein T-förmiges Rahmenelement auf, das mit einer Basis an der sich lateral erstreckenden Welle befestigt ist, mit der der Schwenkrahmen gegenüber dem Heberahmen schwenkbar ist. An Enden eines Querträgers des Schwenkrahmens können die lateral beabstandeten Befestigungspunkte für die sich kreuzenden Zugelemente vorgesehen sein.

Gemäß einer Ausführungsform der Erfindung ist an einem Fuß des T-förmigen Rahmenelements, der die Welle mit dem Querträger verbindet, ein Zugelement zum Koppeln des Schwenkrahmens mit dem Traktor befestigt. Der Fuß kann beispielsweise zwei parallele Elemente umfassen, zwischen denen das Zugelement in der Form einer Kette an einer Querstange befestigt werden kann.

### KURZE BESCHREIBUNG DER FIGUREN

Im Folgenden werden Ausführungsbeispiele der Erfindung mit Bezug auf die beiliegenden Figuren detailliert beschrieben.
Fig. 1 zeigt eine perspektivische Vorderansicht eines Kreiselschwaders gemäß einer Ausführungsform der Erfindung.
Fig. 2 zeigt den Kreiselschwader aus der Fig. 1 in Rückansicht.
Fig. 3 zeigt den Kreiselschwader aus der Fig. 1 in einer seitlichen Ansicht.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### DETAILLIERTE BESCHREIBUNG VON AUSFÜHRUNGSBEISPIELEN

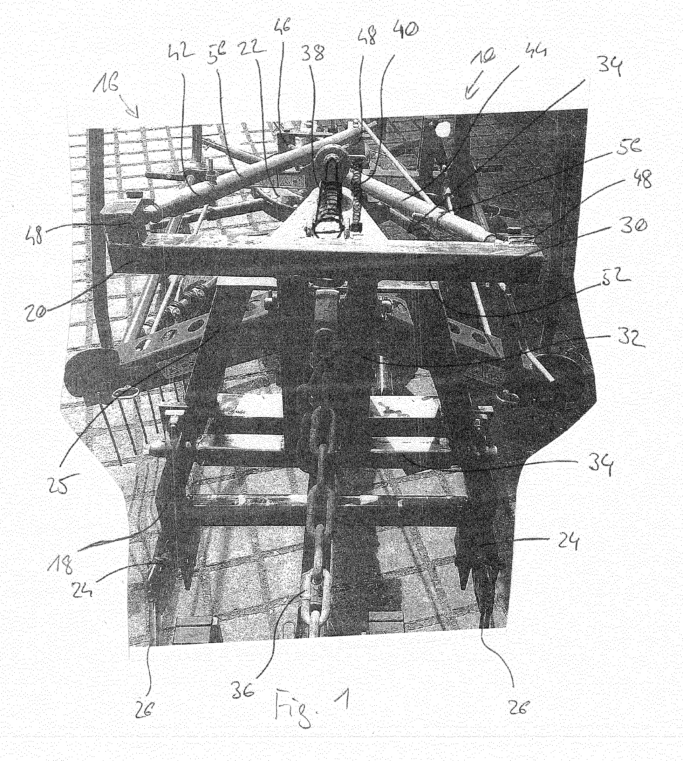

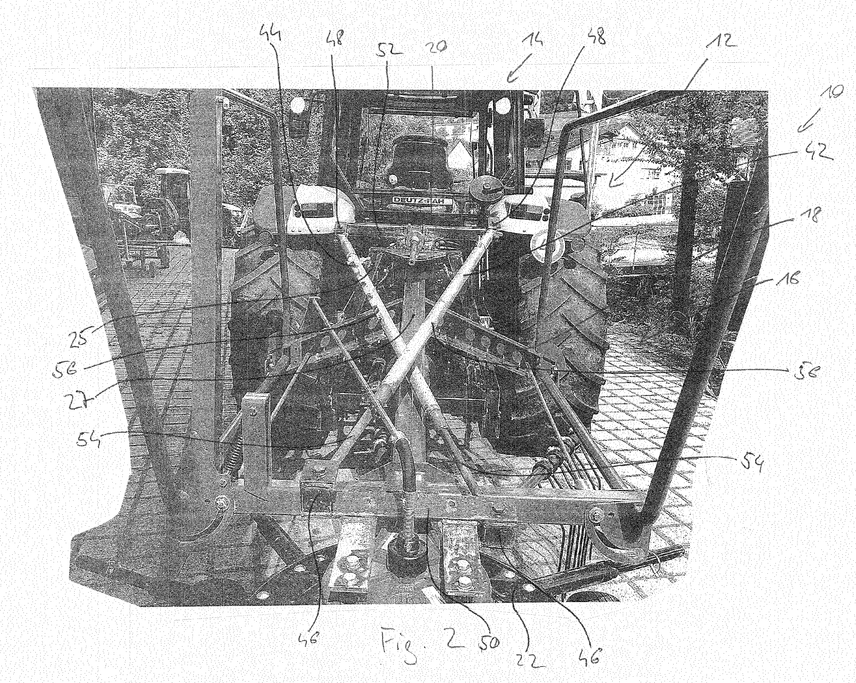

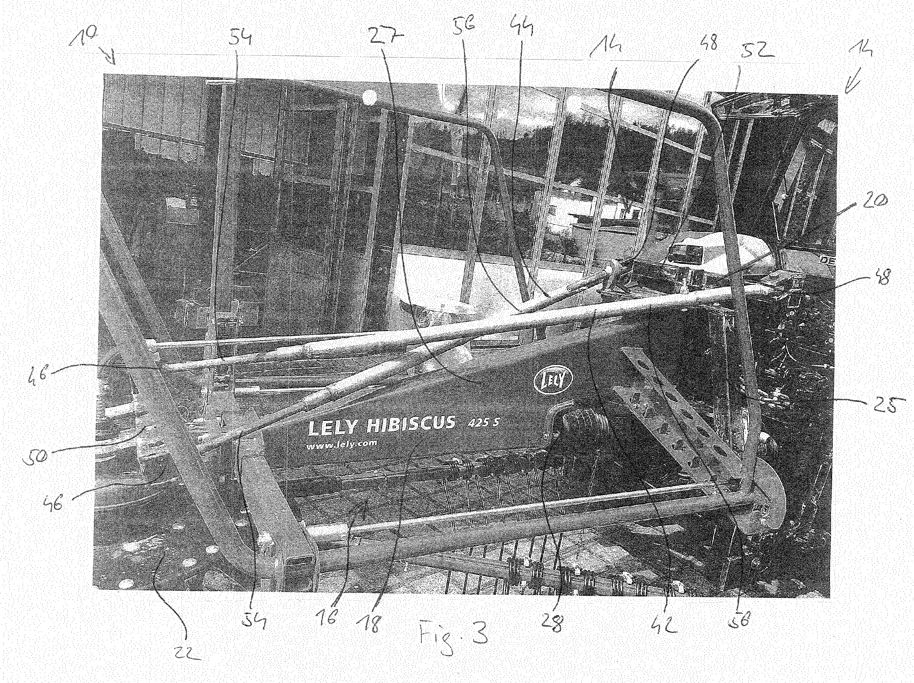

Die Fig. 1 bis 3 zeigen einen Kreiselschwader 10, der an dem Heckhubwerk 12 eines Traktors 14 befestigt ist. Mit dem Hubwerk 12 kann der Kreiselschwader 10 in eine Arbeitsstellung abgesenkt werden und in eine Transport- bzw. Wendestellung angehoben werden.

Der Kreiselschwader umfasst einen Zentrierrahmen 16, der zwei zueinander schwenkbare Rahmenelemente 18, 20 aufweist. Ein Heberahmen 18 trägt den Rechen 22 des Kreiselschwaders 10 und ist über zwei lateral beabstandete Aufhängeelemente 24 mit den Unterlenkern 26 des Hubwerks 12 koppelbar. Der Heberahmen 18 nimmt auch eine Welle 28 auf, die direkt mit der Kupplung des Traktors 14 gekoppelt werden kann und über die der Rechen 22 in Drehung versetzt werden kann.

Die Aufhängeelemente 24 sind über ein jochförmiges Rahmenelement 25 verbunden, das an seinem oberen Ende eine Aufhängung 27 für den Rechen 22 trägt.

Der Schwenkrahmen 20 ist mit dem Heberahmen in der Mitte schwenkbar verbunden. Der Schwenkrahmen 20 weist dabei ein T-förmiges Rahmenelement 30 auf, das mit einer Basis 32 an einer sich lateral erstreckenden Welle 34 befestigt ist, mit der der Schwenkrahmen 20 gegenüber dem Heberahmen 18 schwenkbar ist. Die Welle 34 erstreckt sich dabei in lateraler Richtung durch das jochförmige Rahmenelement 25 des Heberahmens 18.

Der Zentrierrahmen 16 umfasst weiter eine Schwenkvorrichtung 35, die ein Zugelement 36 in der Form einer Kette und einen optionalen Hydraulikzylinder 38 umfasst.

Die Kette 36 ist an der Basis 32 des Schwenkrahmens 20 angebracht und kann mit dem Traktor 14 (beispielsweise mit dem Oberlenker dessen Hubwerks 12) verbunden werden. Somit ist der Schwenkrahmen 20 an seiner Oberseite mit dem Traktor 14 über das Zugelement 36 verbunden.

Der Hydraulikzylinder 38 ist an einem Ende am Schwenkrahmen 20 und mit dem anderen Ende am Heberahmen 18 befestigt, so dass er den Schwenkrahmen 20 von dem Heberahmen 18 wegdrücken kann. Der Hydraulikzylinder 38 verläuft in einer Längsrichtung des Zentrierrahmens 16 und ist auf dem Heberahmen 18 angeordnet ist. Parallel zu dem Hydraulikzylinder 38 ist ein (optionales) Federelement 40 angeordnet, das dazu geeignet ist, den Schwenkrahmen 20 auf den Heberahmen 18 zu zu ziehen, wenn der Hydraulikzylinder 38 nicht unter Druck steht. Es ist aber auch möglich, dass der Schwenkrahmen 20 und der Heberahmen 18 von dem Hydraulikzylinder 38 aufeinander zu gezogen werden.

Der optionale Hydraulikzylinder 38 und das optionale Federelement 40 sind lediglich in der Fig. 1 dargestellt.

Über dem Heberahmen 18 befinden sich zwei gekreuzte Zugelemente 42, 44, die jeweils mit einem Ende an einem ersten Befestigungspunkt 46 an dem Heberahmen 18 und mit einem anderen Ende an einem zweiten Befestigungspunkt 48 an dem Schwenkrahmen 20 befestigt sind. Die ersten Befestigungspunkte 46 sind lateral beabstandet und befinden sich an den Enden eines ersten Querträgers 50 des Heberahmens 18, der über der Aufhängung 27 für den Rechen 22 an dem Heberahmen 18 befestigt ist. Auch die zweiten Befestigungspunkte 48 sind lateral beabstandet und befinden sich an den Enden eines zweiten Querträgers 52 des Schwenkrahmens 20, der zusammen mit der Basis 32 das T-förmige Rahmenelement 30 des Schwenkrahmens bildet.

Die Zugelemente 42, 44 sind Teleskopstangen mit einer Gleitstange 54 und einer Aufnahme 56 in der Form eines Hohlrohrs, in dem die jeweilige Gleitstange 54 beweglich ist. Es ist auch möglich, Ketten, Seilzüge oder Ähnliches anstatt der Rohre 56 mit Gleitstangen 54 zu verwenden. Die wichtigen Merkmale der Zugelemente 42, 44 sind, dass sie eine maximal mögliche Länge aufweisen und dass genügend Länge zum Verkürzen bereitgestellt wird.

Die Gleitstangen 54 und die Rohre 56 sind um eine Achse beweglich an den Querträgern 50, 52 angebracht. Die Rohre 56 sind derart befestigt, dass sie sich zwischen den Befestigungspunkten 46, 48 überkreuzen. Daher ist eines der Rohre 56 etwas höher als das andere Rohr 56 mit dem Schwenkrahmen 20 verbunden. Auf Seite des Rechens 22 sind die Gleitstangen 54 in einer analogen Weise unterschiedlich hoch mit dem Heberahmen 18 verbunden.

Die Zugelemente 42, 44 sind so ausgeführt, dass sie in der Arbeitsstellung des Kreiselschwaders 10 (nahezu) keine Kräfte zwischen den Befestigungspunkten 46, 48 übertragen. Im vorliegenden Fall befinden sich die Gleitstangen 54 in den Rohren 56 nicht im Anschlag.

Ist der Kreiselschwader 10 bzw. der Zentrierrahmen 16 in die Arbeitsstellung abgesenkt, folgt der Rechen 22 noch der Bewegung des Traktors 14, da die eine Gleitstange 54 aus ihrem Rohr 56 herausgleiten kann, während die andere Gleitstange 54 gleichzeitig in ihr Rohr 56 hineingleiten kann. Diese Bewegung ist durch die Länge, in der die Gleitstangen 54 aus den Rohren 56 heraus- und/oder hineingleiten können, begrenzt.

Wenn der Rechen 22 durch das Hubwerk 12 in die Transport-und/oder Wendestellung gehoben wird, wird der Heberahmen 18 angehoben und schwenkt durch sein Eigengewicht und das Gewicht des Rechens 22 nach unten. Der Schwenkrahmen 20 folgt dabei dem Heberahmen 18. Zu dem Zeitpunkt, an dem das Zugelement 36 (beispielsweise eine Kette) gespannt bzw. maximal expandiert ist, hält das Zugelement 36 den Schwenkrahmen 20 zurück, der dann von dem Heberahmen 18 weg schwenkt. Die Zugelemente 42, 44 werden dabei dann von dem Schwenkrahmen 20 expandiert. Bei einer weiteren Hebebewegung schwenkt der Heberrahmen18 mit dem Rechen 22 weiter nach unten, während die Zugelemente 42, 44 maximal expandiert werden, bis sie ihre maximale Länge erreicht haben. Beispielsweise können sich die Gleitstangen 54 bis zu einer möglichen maximalen Länge aus den Rohren 56 herausbewegen. Zu diesem Zeitpunkt wird der ganze Zentrierrahmen 16 angehoben.

In der Transport- bzw. Wendestellung werden wegen der maximal expandierten, gekreuzten Zugelemente 42, 44 zwei Kräfte auf den Heberahmen 18 ausgeübt, eine Zugkraft in Richtung des Traktors 14 (die Hebekraft) und eine laterale (d.h. seitwärts gerichtete Kraft). Diese laterale Kraft unterstützt die Zentrierung des Zentrierrahmens 16, wenn er angehoben wird. Jedes Zugelement 42, 44 weist eine laterale Komponente in Gegenrichtung zum anderen Zugelement 42, 44 auf. Wenn der Rechen 22 zentriert ist, werden gleiche laterale Kräfte auf den Heberahmen 18 ausgeübt. Wenn der Rechen 22 nicht zentriert ist, ist die laterale Kraft, die auf den Heberahmen 18 in Richtung des Zentrums ausgeübt wird, größer als die laterale Kraft, die vom Zentrum des Rechens 22 weg weist. Die gekreuzte Konstruktion der Zugelemente 42, 44 erzeugt eine genügend große laterale Kraftkomponente, so dass der Rechen 22 sogar in Hanglage zentriert werden kann. Auf diese Weise wird ein Ungleichgewicht auf einer schiefen Ebene ausgeglichen.

Um das Zentriervermögen der Zugelemente 42, 44 auf steilen Gefällen zu erhöhen, kann der Hydraulikzylinder 38 verwendet werden. Der Hydraulikzylinder 38 kann mit der Hydraulik des Hebezylinders des Hubwerks 12 gekoppelt sein. Wird der Hebezylinder dazu betrieben, den Zentrierrahmen 16 anzuheben, drückt der Hydraulikzylinder den Heberahmen 18 und den Schwenkrahmen 20 auseinander und erhöht somit das Zentriervermögen.

Das Zentriervermögen kann größer sein, wenn die Befestigungspunkte 46, 48 in lateraler Richtung weiter auseinander stehen. Dies kann umgekehrt zu längeren Gleitstangen 54, die dem Traktor 14 folgen, und zu einer geringeren Hebehöhe führen, da das Heben des Zentrierrahmens 16 davon abhängen kann, wie viel Spielraum durch die Gleitstangen 54 bereitgestellt wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### LISTE DER BEZUGSZEICHEN

- 10: Kreiselschwader
- 12: Hubwerk
- 14: Traktor
- 16: Zentrierrahmen
- 18: Heberahmen
- 20: Schwenkrahmen
- 22: Rechen
- 24: Aufhängeelement
- 25: jochförmiges Rahmenelement
- 26: Unterlenker
- 27: Aufhängung für Rechen
- 28: Antriebswelle des Rechen
- 30: T-förmiges Rahmenelement
- 32: Basis
- 34: Schwenkwelle
- 35: Schwenkvorrichtung
- 36: Zugelement (Kette)
- 38: Hydraulikzylinder
- 40: Federelement
- 42: Zugelement (Teleskopstange)
- 44: Zugelement (Teleskopstange)
- 46: erster Befestigungspunkt
- 48: zweiter Befestigungspunkt
- 50: erster Querträger
- 52: zweiter Querträger
- 54: Gleitstange
- 56: Aufnahme für Gleitstange (Rohr)

## Patentansprüche

1. Zentrierrahmen (16) für ein landwirtschaftliches Gerät (10), der Zentrierrahmen (16) umfassend:
einen Heberahmen (18) der dazu ausgeführt ist, ein rotierbares Werkzeug (22) des landwirtschaftlichen Geräts (10) zu tragen, und mit dem der Zentrierrahmen (16) an einem Traktor (14) befestigbar und von dem Traktor (14) anhebbar ist;
einen Schwenkrahmen (20), der mit dem Heberahmen (18) schwenkbar verbunden ist;
eine Schwenkrahmen-Schwenkvorrichtung (35), die mit dem Schwenkrahmen (20) verbunden ist und die dazu ausgeführt ist, den Schwenkrahmen (20) von dem Heberahmen (18) wegzuschwenken, wenn der Heberahmen (18) von dem Traktor (14) angehoben wird; und
zwei sich kreuzende Zugelemente (42, 44), die an dem Heberahmen (18) an lateral beabstandeten Befestigungspunkten (46) und an dem Schwenkrahmen (20) an lateral beabstandeten Befestigungspunkten (48) derart angebracht sind, dass die sich kreuzenden Zugelemente (42, 44) durch Wegschwenken des Schwenkrahmens (20) vom Heberahmen (18) expandiert werden und ab einer maximal expandierten Stellung laterale Kräfte auf den Heberahmen (18) ausüben, so dass das rotierbare Werkzeug (22) nach dem Anheben des Heberahmens (18) in einer zentrierten Stellung gehalten wird.

2. Zentrierrahmen (16) nach Anspruch 1,
wobei die sich kreuzenden Zugelemente (42, 44) jeweils eine Gleitstange (54) und eine Aufnahme (56) für die Gleitstange (54) umfassen, wobei die Gleitstange (54) in der Aufnahme (56) verschiebbar ist und in der maximal expandierten Stellung an der Aufnahme (56) anschlägt.

3. Zentrierrahmen (16) nach Anspruch 2,
wobei die Aufnahme (56) ein Rohr ist, in dem ein Ende der Gleitstange (54) gleitend gelagert ist.

4. Zentrierrahmen (16) nach Anspruch 2 oder 3,
wobei die Gleitstange (54) am Heberahmen (18) und die Aufnahme (56) am Schwenkrahmen (20) befestigt sind.

5. Zentrierrahmen (16) nach einem der vorhergehenden Ansprüche,
wobei die lateralen Befestigungspunkte (46, 48) am Heberahmen (18) und/oder am Schwenkrahmen (20) auf unterschiedlicher Höhe angebracht sind.

6. Zentrierrahmen (16) nach einem der vorhergehenden Ansprüche, wobei die Schwenkrahmen-Schwenkvorrichtung (35) ein weiteres Zugelement (36) umfasst, das derart mit dem Traktor (14) koppelbar ist, dass der Schwenkrahmen (20), wenn der Heberahmen (18) durch Anheben durch den Traktor (14) nach unten fällt, durch das expandierte weitere Zugelement (36) von dem Heberahmen (18) weggeschwenkt wird; und/oder
wobei das weitere Zugelement (36) eine Kette und/oder einen Seilzug umfasst.

7. Zentrierrahmen (16) nach einem der vorhergehenden Ansprüche, wobei die Schwenkrahmen-Schwenkvorrichtung (35) einen Hydraulikzylinder (38) umfasst, der dazu ausgeführt ist, den Schwenkrahmen (20) von dem Heberahmen (18) wegzudrücken.

8. Zentrierrahmen (16) nach Anspruch 7,
wobei der Hydraulikzylinder (38) in einer Längsrichtung des Zentrierrahmens (16) verläuft und/oder der Hydraulikzylinder (38) auf dem Heberahmen (18) angeordnet ist.

9. Zentrierrahmen (16) nach Anspruch 7 oder 8,
wobei der Hydraulikzylinder (38) derart mit einer Hydraulik eines Hebezylinders des Traktors (14) koppelbar ist, dass bei einem Anheben des Heberahmens (18) durch den Hebezylinder der Schwenkrahmen (20) durch den Hydraulikzylinder (38) von dem Heberahmen (18) weggedrückt wird.

10. Zentrierrahmen (16) nach einem der Ansprüche 7 bis 9,
wobei ein Federelement (40) parallel zu dem Hydraulikzylinder (38) zwischen dem Heberahmen (18) und dem Schwenkrahmen (20) angebracht ist, das dazu geeignet ist, den Heberahmen (18) und den Schwenkrahmen (20) aufeinander zu zu ziehen.

11. Zentrierrahmen (16) nach einem der vorhergehenden Ansprüche,
wobei der Heberahmen (18) zwei lateral beabstandete Aufhängeelemente (24) aufweist, die dazu ausgeführt sind, in ein Hubwerk des Traktors (14) eingehängt zu werden, die über ein jochförmiges Rahmenelement (25) verbunden sind, an dessen oberem Ende eine Aufhängung (27) für das rotierbare Werkzeug (22) angebracht ist;
wobei der Schwenkrahmen (20) mit einer sich lateral erstreckenden Welle (34) an dem jochförmigen Rahmenelement (25) angebracht ist.

12. Zentrierrahmen (16) nach einem der vorhergehenden Ansprüche,
wobei der Heberahmen (18) über einer Aufhängung (27) für das rotierbare Werkzeug (22) einen Querträger (50) aufweist, an dessen Enden die lateral beabstandeten Befestigungspunkte (46) für die sich kreuzenden Zugelemente (42, 44) vorgesehen sind.

13. Zentrierrahmen (16) nach einem der vorhergehenden Ansprüche,
wobei der Schwenkrahmen (20) ein T-förmiges Rahmenelement (30) aufweist, das mit einer Basis (32) an einer sich lateral erstreckenden Welle (34) befestigt ist, mit der der Schwenkrahmen (20) gegenüber dem Heberahmen (18) schwenkbar ist; wobei an Enden eines Querträgers (52) des Schwenkrahmens (20) die lateral beabstandeten Befestigungspunkte (48) für die sich kreuzenden Zugelemente (42, 44) vorgesehen sind.

14. Zentrierrahmen (16) nach Anspruch 13,
wobei an einem Fuß des T-förmigen Rahmenelements (30), der die Welle (34) mit dem Querträger (52) verbindet, ein Zugelement (36) zum Koppeln des Schwenkrahmens (20) mit dem Traktor (14) befestigt ist.

15. Kreiselschwader (16) mit einem Zentrierrahmen (16) nach einem der vorhergehenden Ansprüche,
wobei das rotierbare Werkzeug (22) ein Rechen ist.
